# EUROPEAN PATENT SPECIFICATION

(11) **EP 3 962 711 B1**
(45) Date of publication and mention of the grant of the patent: **22.11.2023**
(21) Application number: 20719749.2
(22) Date of filing: 15.04.2020
(51) Int. Cl.: B29C 57/02, B29B 13/02, B29K 101/12

(54) **BELLING MACHINE FOR PIPES IN THERMOPLASTIC MATERIAL AND METHOD FOR CONTROLLING THE THERMAL STATE OF A HEATING STATION OF SAID MACHINE**
MUFFENFORMMASCHINE FÜR ROHREN AUS THERMOPLASTISCHEM MATERIAL UND VERFAHREN ZUR STEUERUNG DES THERMISCHEN ZUSTANDES EINER HEIZSTATION DER GESAGTEN MASCHINE
TULIPEUSE POUR TUYAUX EN MATÉRIAU THERMOPLASTIQUE ET PROCÉDÉ DE COMMANDE DE L'ÉTAT THERMIQUE D'UNE STATION DE CHAUFFAGE DE CETTE MACHINE

(30) Priority: 29.04.2019 IT 201900006438
(43) Date of publication of application: 09.03.2022
(73) Proprietor: SICA S.P.A., 48011 Alfonsine (Ravenna) (IT)
(72) Inventor: TABANELLI, Giorgio, 48033 Cotignola (RAVENNA) (IT); CAVINI, Alessandro, 44011 Argenta (FERRARA) (IT)
(74) Representative: Milli, Simone
(86) International application number: PCT/IB2020/053536
(87) International publication number: WO 2020/222063

(56) References cited:
- DE-A1- 2 310 388
- DE-A1- 10 058 505
- JP-A- H10 682
- US-A- 3 958 921

## Description

### Technical field

This invention relates to and improved belling machine.

More specifically, the invention relates to a belling machine comprising an improved heating station for heating the end portions of pipes in thermoplastic material.

The invention also relates to a method for controlling the thermal state of a heating station of a belling machine.

### Background art

Belling machines are machines in which, after heating, ends of pipes in thermoplastic material are subjected to a hot plastic deformation process, to form a "bell" designed for the connection of portions of pipe in succession.

These machines therefore comprise one or more heating stations so that the end of the pipe reaches the hot state and at least one station for forming the shape of the bell on the heated end.

Belling machines must process pipes made of many plastic materials: Polypropylene (PP), high-density polyethylene (HDPE), Polyvinyl chloride (PVC) etc. and the intrinsic differences between these various materials lead to the production of belling machines which are even very different to each other.

If, for example, a comparison is made between belling machines for Polypropylene and Polyethylene with a belling machine for PVC pipes, these two types appear to be completely different, even though what they do is substantially the same.

The main reason is that the HDPE and the PP with respect to the PVC, PMMA or other materials are semi-crystalline materials and therefore do not exhibit a vitreous transition temperature like PVC at the working temperatures, that is to say, they do not soften.

In fact, PVC (even though this should more precisely be referred to as PVC-U, rigid unplasticised polyvinyl chloride) is a substantially amorphous material which at ambient temperature exhibits a fragile mechanical behaviour similar to glass; at temperatures greater than 75°C-80°C (vitreous transition temperature Tg) the PVC-U starts to soften, exhibiting a plastic rubbery behaviour. Normally, with the PVC-U pipe the belling step allows a relatively large optimum thermal heat state range. The optimum temperatures for a belling process of the PVC-U pipe are approximately between 90°C and 125°C.

As mentioned, PP and HDPE are materials which exhibit a semi-crystalline behaviour at ambient temperature, that is to say, there coexists in them an ordered macromolecular crystalline configuration and a disordered amorphous macromolecular configuration. At ambient temperature the amorphous part is in a viscous liquid state, so the ambient temperature is greater than the vitreous transition temperature of the amorphous part of the material. At ambient temperature, PP and HDPE exhibit a ductile and tough mechanical behaviour. Unlike PVC-U, PP and HDPE have a melting temperature, that is to say, a temperature above which there is a destruction of the crystalline mesh and the change of state from solid to liquid. The melting temperature of PP is approximately 165°C, whilst that of HDPE is approximately 134°C.

The change from the solid state to the liquid state is sudden and occurs in a very small temperature range equal to approximately ± 1°C. At temperatures higher than melting temperature the process of forming the bell in the hot state cannot be performed.

PP and HDPE soften at temperatures close to that of melting and the working range in the plastic state is just a few degrees below this temperature, that is to say 165°C for PP and 134°C for the HDPE.

The processing range is therefore very limited and, depending also on the complexity of the shape of the bell to be formed, a greater or lesser approach to the melting temperature may be required.

In fact, for example in the case of PP, processing the same pipe at 158°C requires a much greater effort than carrying out the same processing at 162°C.

In light of the above, in the belling process for PP and HOPE pipes, the hot working temperature can vary within a very small range, approximately ± 2°C around the predetermined optimum value.

Not only must the temperature of the material to be formed be kept within a very small range but also the portion of pipe to be processed must have a substantially uniform temperature.

In fact, compared with PVC-U pipes, the most common belling processes applied to PP and HDPE pipes require a temperature distribution along the axis of the pipe, in the circumference and in the thickness of the wall which is almost uniform, as with different temperatures in various zones of the pipe there would be a different behaviour with the shrinkage of the various zones of the bell and, consequently, an unacceptable distortion in shape and a dimensional instability of the bell.

For the above-mentioned reasons, contact heating ovens are widely applied in the heating stations of belling machines for PP and HOPE pipes. The contact ovens are substantially configured with metallic masses which adhere to the surface of the end of the pipe. The metallic masses are thermo-controlled, that is to say, they are maintained at a predetermined temperature and transfer the heat to the wall of the pipe by conduction. Normally, the contact oven is configured with shells which enclose the outside of the wall of the pipe.

A spindle which heats again by contact or a device which operates with a different heat transmission system can be inserted inside the pipe in the same oven. These internal heating means are, however, particularly complex both in structural and operational terms. In fact, pipes in thermoplastic material are typically produced with an extrusion process wherein the calibration of the circular shape and size of the pipe occurs, continuously, directly on the outer surface of the pipe which, therefore, is regular and precise; on the other hand, the geometrical shape and dimensions of the inner surface, which are not calibrated in the extrusion process, are irregular. Consequently, it is difficult to transmit heat towards the inner surface of the pipe. Also for this reason, it is normally preferred to heat the pipe mainly by external contact, adopting solutions for the internal heating that make the heating process faster and such as not create thermal discontinuities in the wall of the pipe.

The contact ovens normally have a clamp-like shape, so as to clamp on the portion of the pipe to be heated.

More specifically, the contact ovens of the known and most widespread type have two heating half-clamps on each of which is installed a metallic reduction element designed to come into contact with the pipe to be heated.

The presence of the reduction element is necessary to allow the oven to heat pipes with different diameters, that is to say, allowing a fast and simple changeover of the format being processed.

On the other hand, for each different size of pipe different heating ovens should be provided, thereby exponentially increasing the costs of the plant in light of the very large number of different formats which the market requires.

In the prior art ovens described above, the heating elements, typically electrical cartridge resistors, are installed in the half-clamps, so as not to be affected by the size changeover operations which involve the replacement of the reduction elements.

The reduction elements have a significant metal mass made of a material with a high level of heat conduction properties, typically an aluminium alloy, and they have one or more housings for respective pipes to be heated, with a number compatible with the nominal diameter of the pipe. Each reduction element is stably fixed to the respective half-clamp by means of captive screws in such a way as to guarantee, at the coupling areas, the best contact between the respective surfaces of the half-clamp and the reduction element.

A thermocouple for measuring the temperature is normally inserted in the body of one or both of the half-clamps, so as to monitor their thermal state. Sometimes, alternatively, a thermocouple, advantageously of the quick coupling type, is inserted in the reduction element so as to measure the temperature close to the housing of the pipe to be heated.

Neither of the above-mentioned arrangements of the thermocouples guarantee the maintaining in a simple manner of the temperature close to the pipes since many aspects affect the heating/cooling of the contact oven components.

More specifically, variables which are able to complicate the maintaining of a correct heating temperature consist of the coupling surfaces described above which, if they are only slightly oxidised, or not perfectly in contact, constitute a barrier for the transfer of heat, or the continuous opening and closing of the oven for extracting heated pipes and the insertion of new pipes to be heated, or yet other variables.

Basically, in order to measure a meaningful temperature for the purpose of an optimum processing of the pipe, it would be appropriate to position the thermocouple in the proximity of the pipe to be heated but in this way it is far from the supply of thermal power (with inevitable thermal inertias) and, moreover, there is, as mentioned, a physical separation between the surfaces of the half-clamp and the reduction element, which make the response of the system rather imprecise and unpredictable.

Even by placing the thermocouple close to the heating element the result does not improve much. In fact, although it is possible to hope in a faster response in the activation or deactivation of the heating element, on the other hand there are no precise indications of the actual temperature close to the pipe.

The difficulties linked to the above-mentioned drawbacks are sometimes overcome empirically by the experience and intuition of the operators, which clearly constitutes a limit to the repeatability of a correct processing cycle.

Document US3958921A shows a heating unit which is constructed from two horizontally reciprocating parts having complementary recesses to define several, vertically stacked, cylindrical heating chambers, each with a central heating core extending from a common rear wall plate. The arrangement is movable in axial direction to receiving tube ends positioned in aligned and vertically stacked, horizontal position, in front of the heating chambers. Conveyor and transport facilities move tubes laterally in and out of these positions and cause each of them to be heated, in sequence, in all of the chambers.

Document DE2310388A1 shows a heating device which is in design similar to a press, plastics-coated holding jaws are provided which snugly fit the tube or profile to be heated. The plastics coating is applied only at the surfaces coming into contact with the tubes or profiles, and an electric heating device is embedded in the holding jaws in close vicinity to the contact surfaces. The disclosed device affords direct contact of the plastics article with the heating surfaces without risk of caking or thermal degradation.

Document JPH10682A shows a heater obtaining a faucet having a uniform thickness when end of a synthetic resin tube is radially enlarged by heaving to soften the end to a uniform temperature.

Document DE10058505A1 shows a method for heating at least portions of plastic tubes inside at least one heating station whereby the plastic tubes are, at least in part, brought to a deformation temperature inside the heating station. The plastic tubes are at least partially heated inside the heating station with short-wave or halogen infrared radiators from the inside and/or from the outside, and the heat output of the infrared radiators is controlled or regulated during the heating process of the plastic tubes.

### Disclosure of the invention

The aim of the invention is to provide a belling machine and a method for controlling the thermal state of a heating station of a belling machine which overcome the drawbacks and the problems of the prior art and allow a precise, accurate and repeatable heating of the pipes in thermoplastic material to be carried out for forming the bell.

Another aim of the invention is to provide a belling machine is practical to use and simple and economical to make.

These aims and others, which are more apparent in the description which follows, are achieved, in accordance with the invention, by a belling machine for pipes in thermoplastic material and by a method for controlling the thermal state of a heating station of the machine, comprising the technical features described in the appended claims.

### Brief description of drawings

The technical features of the invention, with reference to the above aims, are clearly described in the claims below and its advantages are more apparent from the detailed description which follows, with reference to the accompanying drawings which illustrate a preferred, non-limiting embodiment of the invention by way of example and in which:
- Figure 1 is a schematic cross-section view of a heating station for a belling machine made according to the invention;
- Figure 2 is a schematic front elevation view of the heating station of Figure 1;
- Figure 3 is a block diagram of functional aspects of the belling machine according to the invention.

### Detailed description of preferred embodiments of the invention

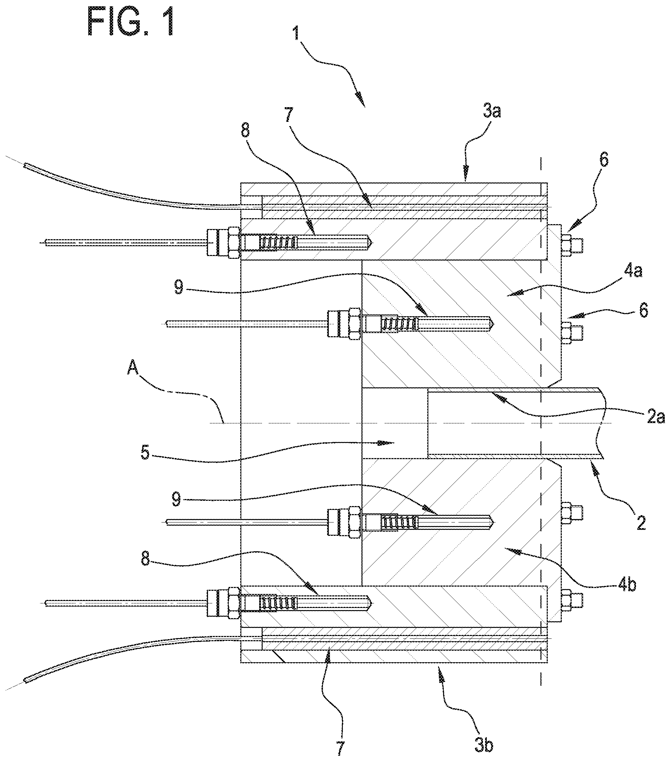

As illustrated in Figure 1, in accordance with the invention, the reference numeral 1 denotes in its entirety a station for heating pipes 2 in thermoplastic material to be inserted in a belling machine, not illustrated in its entirety.

In short, as mentioned, the belling machine comprises, downstream of the heating station 1, a forming station, not illustrated, at which the heated pipes 2 are subjected to a forming process for forming a bell close to their longitudinal end portion 2a.

Advantageously, in the case of a belling machine comprising two or more heating stations, the heating station 1 according to the invention is located immediately upstream of the above-mentioned and not illustrated station for forming the pipes 2.

With reference to Figure 1, the heating station 1 adopts basically the shape of a contact oven wherein, that is, the above-mentioned end portion 2a of the pipe 2 in thermoplastic material is heated by conduction, in the contact between the pipe 2 and a heated metal mass.

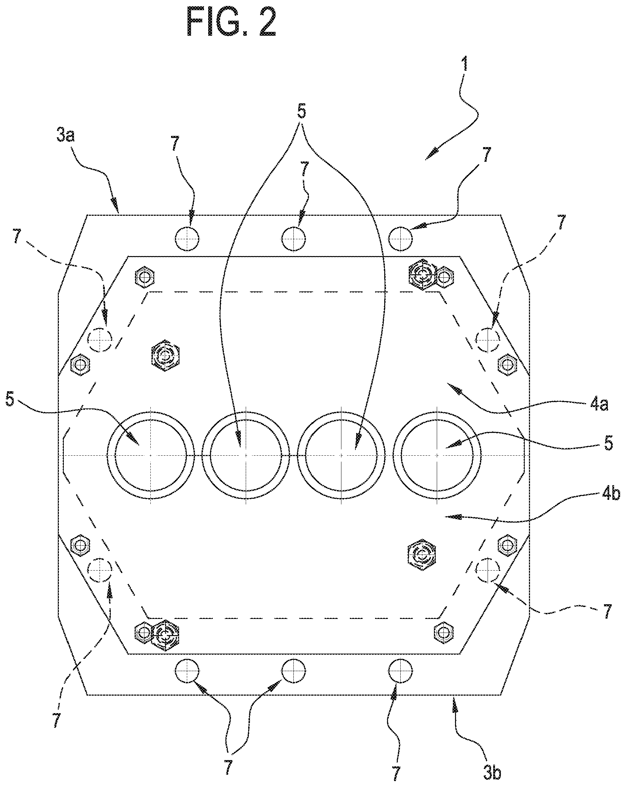

More in detail, with reference to Figures 1 and 2, the heating station 1 comprises a pair of half-clamps 3a, 3b which are moved, by devices of known type and not illustrated, between a spaced-apart configuration, not illustrated, and a close-together configuration, shown in Figure 1, to allow, respectively, the insertion/extraction of the pipes 2 inside it and their thermal treatment.

For the purposes of this description, reference is only made to the above-mentioned close-together position since it is in this configuration that the heating of the pipe 2 in thermoplastic material according to the invention occurs.

More in detail, the station 1 comprises an upper half-clamp 3a and a lower half-clamp 3b.

The upper and lower half-clamps 3a, 3b support respective reduction elements 4a, 4b which are configured for mutually combining for embracing in contact the pipes 2 in thermoplastic material at their end portion 2a.

The purpose of the reduction elements 4a, 4b is, as mentioned above, to allow the oven, or heating station, to heat pipes 2 of different diameters.

The reduction elements 4a, 4b have a significant metal mass made of a material with a high level of heat conduction properties, typically an aluminium alloy, and define housings 5 for respective pipes 2 to be heated.

Each reduction element 4a, 4b is stably fixed to the respective half-clamp 3a, 3b by threaded connections 6.

Respective heating elements 7 are installed on each half-clamp 3a, 3b.

In the embodiment illustrated, each half-clamp 3a, 3b has five heating elements 7 inserted in respective cavities made in the metal mass of the half-clamp 3a, 3b.

Advantageously, the heating elements 7 are electrical cartridge resistors, extending longitudinally parallel to an axis A of the pipe 2 being heated. As illustrated in Figure 1, a respective thermocouple 8 is inserted inside each half-clamp 3a, 3b.

Advantageously, the thermocouples 8 are located in the proximity of each heating element 7.

With reference to the preferred embodiment illustrated in the accompanying drawings, a respective thermocouple 9 is inserted inside each reduction element 4a, 4b.

Advantageously, the thermocouples 9 are located close to a housing 5. The thermocouples 8 located on the half-clamps 3a, 3b define in their entirety, for the heating station 1, first means for measuring the temperature.

The thermocouples 9 located on the reduction elements 4a, 4b define in their entirety, for the heating station 1, second means for measuring the temperature.

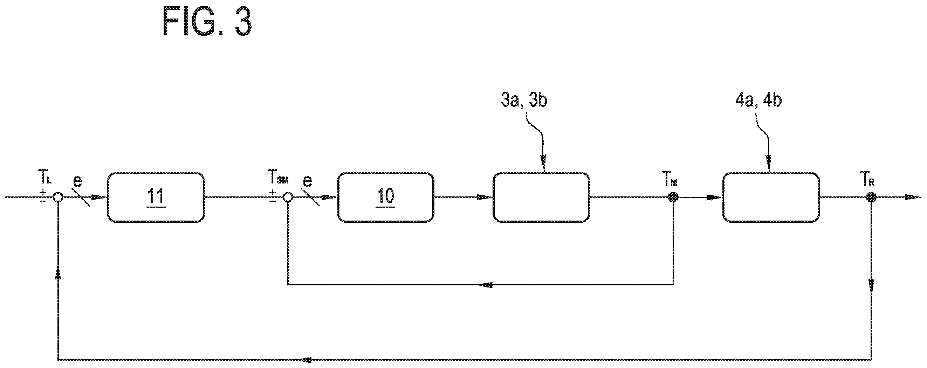

As schematically illustrated in Figure 3, the heating station 1 according to this invention comprises, indicated with a block 10, a first PID controller and, indicated by a block 11, a second PID controller.

For the purposes of this description, the expression PID controller (proportional, integral, derivative) means an electronic device which is able to acquire as input a value from a predetermined process (in this specific case a temperature value) and to compare it with a reference value. The difference, the so-called error signal, is therefore used to determine the value of the controller output variable.

As will also be described in more detail below, the first controller 10 is configured to control the feeding of the heating element(s) 7 on the basis of the difference between the temperature T_{M} on the half-clamp 3a, 3b and a desired reference temperature T_{SM} for the same half-clamp 3a, 3b.

On the other hand, the second controller 11 is configured to generate a value of the desired reference temperature T_{SM} of the half-clamps 3a, 3b based on the difference between a temperature T_{R} measured on the reduction elements 4a, 4b and a desired working temperature T_{L} which has been determined in advance.

The operation of the above-mentioned first and second PID controllers 10, 11 and that of the thermocouples 8 and 9 is controlled and regulated by a computerised command and control unit not illustrated in the accompanying drawings.

The above-mentioned and not illustrated computerised command and control unit is in fact configured for receiving the setting of the above-mentioned desired working temperature T_{L} and for controlling, through the first and second PID controllers 10, 11, the regulation of the electric power supply of the heating elements 7 in such a way that the reduction elements 4a, 4b reach the desired operating T_{L}.

Advantageously, the heating station 1 comprises for each half-clamp 3a, 3b and relative reduction element 4a, 4b a respective first PID controller 10 and a respective second PID controller 11. Thanks to this architecture, as will also be clarified in detail in the following functional description, the heating station 1 is able to optimise its operation even in the presence of circumstances which can influence in a different manner the thermal state of the two half-clamp/upper and lower reduction elements.

The following description is made with reference to a single half-clamp/reduction element, taking into account the fact that each of the two upper and lower sets is controlled by the respective PID controllers 10, 11 autonomously.

In use, the working temperature T_{L} which represents the temperature to be obtained stably in the reduction element 4a, 4b is set, on the above-mentioned and not illustrated computerised command and control unit, at the zone designed to enter into contact with the pipes 2 in plastic material to be heated, that is, at the housings 5.

The system, in this case the computerised command and control unit, initially establishes the value T_{L} set also as the set point (i.e. desidered reference) temperature T_{SM} of the half-clam 4a, 4b.

In other words, initially T_{SM} = T_{L}

The first PID controller 10 operates on the basis of the set point (i.e. desidered reference) temperature T_{SM}, controlling the supply of electricity to the heating element(s) 7 acting on the half-clamp 3a, 3b until the temperature T_{M} measured on the same half-clamp 3a, 3b by the relative thermocouple 8 equals the set point (i.e. desidered reference) value T_{SM}, thereby reaching a predetermined degree of stability.

After reaching the requested stability in the temperature T_{M} measured on the half-clamp 3a, 3b the second PID controller 11 is activated, the purpose of which is to compare the temperature T_{R} measured by the thermocouple 9 located on the reduction element 4a, 4b with the desired working temperature T_{L} and consequently modify the set point (i.e. desidered reference) temperature T_{SM}.

In other words, the second PID controller 11, once the thermal stability on the half-clamp 3a, 3b has been reached, checks the effect, in terms of temperature, of the thermal state on the respective reduction element 4a, 4b: if the temperature T_{R} is still less than the desired value T_{L} then it is necessary to increase the thermal state and to do this the second PID controller 11 modifies (that is, updates), increasing it, the set point (i.e. desidered reference) temperature value T_{SM}; the first PID controller 10 reacts to this modification or updating, which consequently, finding a difference ΔT between the set point (i.e. desidered reference) temperature T_{SM} and the temperature T_{M} measured on the half-clamp 3a, 3b by the thermocouple 8, supplies electricity to the heating elements(s) 7 until the above-mentioned difference ΔT is reduced to zero and the temperature T_{M} measured on the half-clamp 3a, 3b is not stably set on the new requested set point value.

The process is iterative and stops when the temperature T_{R} read on the reduction element 4a, 4b by the relative thermocouple 9 equals the desired value of the working temperature T_{L} which was initially set. Advantageously, the frequency with which the controlling step performed by the first PID controller 10 is repeated is different from that with which the control performed by the second PID controller 11 is repeated.

In other words, the step of updating the desired reference temperature T_{SM} of the half-clamp 3a, 3b performed by the second PID controller 11 is repeated with a lower frequency, even ten times less, with respect to the frequency with which the action of the first PID controller 10 is repeated.

In this way, it is operatively possible to consider the steady state temperature T_{R} read on the reduction element 4a, 4b to be substantially stationary with respect to that of the temperature T_{M} measured on the half-clamp 3a, 3b.

Advantageously, as mentioned, each half-clamp/reduction element pair has the relative pair of first and second PID controllers 10, 11.

In particular, it is important to note that as a function of the convective motions existing inside the heating station also in relation to additional heating elements inside the pipe, not illustrated but normally present, the thermal state of the half-clamp/upper reduction element is different from that of the half-clamp/lower reduction element.

This circumstance is conveniently controlled by the heating station 1 according to the invention in its configuration which comprises different first and second PID controllers 10, 11, respectively for the half-clamp/upper and lower reduction elements.

In other words, since the convective motion will result in greater heat towards the upper reduction element, the first and second PID controllers 10, 11 will control the heating of the half-clamp/upper reduction element in a different way to that for the half-clamp/lower reduction element, the heating elements 7 of which will therefore be forced to compensate for that heat which, due to the convective motions, transfers towards the half-clamp/upper reduction element.

The characteristic of the heating station where each half-clamp/reduction element has the relative pair of first and second PID controllers 10, 11 is associated advantageously with a configuration of the command and control unit which allows two different values of the desired working temperature to be set: a specific value for the half-clamp/upper reduction element and a specific value for the half-clamp/lower reduction element. These are different temperature values T_{L} determined and desired in advance.

In fact, in the circumstances in which the convective effects correlated with the additional heaters inside the pipe are particularly significant, in order to obtain a final thermal state of the end of the pipe in reduced cycle times, but in any case optimum for the belling, and therefore uniform, it is effective to set a temperature T_{L} for the half-clamp/upper reduction element which is lower than that set for the half-clamp/lower reduction element.

According to alternative embodiments of the belling machine according to the invention, not illustrated, between the half-clamps 3a, 3b and the reduction elements 4a, 4b equipped with thermocouples 9 there are intermediate adapter bodies consisting basically of simple metallic masses.

The belling machine and the method for controlling the thermal state of the heating station according to the invention achieve the preset aims and achieve significant advantages.

A first advantage linked to the invention is the possibility of reaching, substantially automatically and without the intervention of operators, the desired temperature on the reduction elements at the housings of the pipes to be heated.

In other words, by the action of the two PID controllers it is possible to limit the intervention of the operator to the mere setting of the desired temperature.

Moreover, thanks to the machine and the method according to the invention, any external influence on the thermal state of the heating station can be detected and compensated autonomously and automatically.

## Claims

1. A belling machine for pipes (2) in thermoplastic material, comprising at least one heating station (1) for heating the pipes (2) to be formed and a forming station at which an end portion (2a) of said pipes (2) is shaped in the form of a bell, said at least one heating station (1) comprising:
- a pair of half-clamps (3a, 3b) designed to close around said end portion (2a) of the pipes (2),
- two reduction elements (4a, 4b) each supported by a respective half-clamp (3a, 3b) and configured to mutually match for enclosing in contact said pipes (2) at their said end portion (2a),
- at least one electric heating element (7) which is operatively positioned in each of said half-clamps (3a, 3b),
- first means (8) for measuring the temperature positioned in at least one of said half-clamps (3a, 3b), close to said electric heating element (7),
- second means (9) for measuring the temperature positioned on at least one of said reduction elements (4a, 4b),
- a first PID controller (10) configured for controlling the power supply of the electric heating element (7) on the basis of the difference between a temperature (T_{M}) measured on said half-clamp (3a, 3b) and a desired reference temperature (T_{SM}) in said half-clamp (3a, 3b),
- a second PID controller (11) configured for generating a value of said desired reference temperature (T_{SM}) of the half-clamps (3a, 3b) on the basis of the difference between a temperature (T_{R}) measured on said reduction element (4a, 4b) by said second means (9) for measuring the temperature, and a desired working temperature (T_{L}) of said reduction element (4a, 4b) determined in advance.

2. The belling machine according to the preceding claim, **characterised in that** it comprises a computerised command and control unit configured for receiving the setting of said desired working temperature (T_{L}) and for controlling through said first and second PID controller (10, 11) the regulation of the electric power supply of said at least one electric heating element (7) such that said reduction element (4a, 4b) reaches said desired working temperature (T_{L}).

3. The belling machine according to any one of the preceding claims, wherein said first and second means for measuring the temperature comprise thermocouples (8, 9), **characterised in that** it comprises at least one respective thermocouple (8) positioned in each of said half-clamps (3a, 3b) and **in that** it comprises at least one respective thermocouple (9) positioned in each of said reduction elements (4a, 4b).

4. The belling machine according to claim 3, **characterised in that** it comprises for each half-clamp (3a, 3b) and relative reduction element (4a, 4b) a respective first PID controller (10) and a respective second PID controller (11).

5. The belling machine according to any one of the preceding claims, **characterised in that** said heating station (1) is positioned immediately upstream of said forming station at which an end portion (2a) of said pipes (2) is shaped in the form of a bell.

6. A control method for controlling the thermal state of a heating station of a belling machine of pipes (2) in thermoplastic material, comprising the steps of:
- preparing a heating station (1) for heating pipes (2) comprising a pair of half-clamps (3a, 3b), two reduction elements (4a, 4b) each supported by a respective half-clamp (3a, 3b) and configured to mutually match for enclosing in contact said pipes (2) at a relative end portion (2a),
- preparing at least one electric heating element (7) which is operatively positioned in each of said half-clamps (3a, 3b),
- setting a desired working temperature (T_{L}) for said reduction elements (4a, 4b),
- measuring the temperature (T_{M}) of said half-clamps (3a, 3b) close to the electric heating element (7),
- controlling the electric power supply of said electric heating element (7) by means of a first PID controller (10) on the basis of the difference between the temperature (T_{M}) measured in said half-clamps (3a, 3b) and a desired reference temperature (T_{SM}) for said half-clamps (3a, 3b),
- measuring the temperature (T_{R}) of a corresponding reduction element (4a, 4b) supported by one of said half-clamps (3a, 3b),
- controlling said desired reference temperature (T_{SM}) by means of a second PID controller (11) on the basis of the temperature (T_{R}) measured on the corresponding reduction element (4a, 4b),
- repeating said control steps operated by means of said first and second PID controllers (10, 11), until the temperature (T_{R}) measured in the corresponding reduction element (4a, 4b) matches the desired working temperature (T_{L}).

7. The control method according to the preceding claim, **characterised in that** the step of controlling said desired reference temperature (T_{SM}) comprises the step of updating the value of said desired reference reference temperature (T_{SM}) for said half-clamps (3a, 3b).

8. The control method according to claim 6 or 7, **characterised in that** the step of repeating said control steps is carried out with different frequencies for said first and second controllers (10, 11) PID.

9. The method according to claim 8, **characterised in that** the frequency with which said control step performed with said first PID controller (10) is repeated is at least ten times greater than that with which said control step performed with said second PID controller (11) is repeated.

10. The control method according to any one of claims 6 to 9, **characterised in that** it comprises a step of initially imposing the value of said desired working temperature (T_{L}) as the first value of said desired reference temperature (T_{SM}) for said half-clamps (3a, 3b).

11. The control method according to any one of claims 6 to 10, **characterised in that** said repeating step is actuated only when a first stationary steady state condition of the temperature (T_{R}) measured on the reduction element (4a, 4b) is reached.

## Patentansprüche

1. Muffenformmaschine für Rohre (2) aus thermoplastischem Material, umfassend mindestens eine Heizstation (1) zum Erhitzen der zu formenden Rohre (2) und eine Formungsstation, an der ein Endabschnitt (2a) der Rohre (2) in der Form einer Glocke ausgeformt ist, wobei die mindestens eine Heizstation (1) Folgendes umfasst:
- ein Paar Schellenhälften (3a, 3b), die ausgestaltet sind, um sich rund um den Endabschnitt (2a) der Rohre (2) zu schließen,
- zwei Reduktionselemente (4a, 4b), die jeweils von einer jeweiligen Schellenhälfte (3a, 3b) getragen werden und passend zueinander ausgelegt sind, um die Rohre (2) an deren Endabschnitt (2a) in Kontakt zu umschließen,
- mindestens ein elektrisches Heizelement (7), das betriebswirksam in einer jeden Schellenhälfte (3a, 3b) positioniert ist,
- erste Mittel (8) zum Messen der Temperatur, die in mindestens einer der Schellenhälfte (3a, 3b) in der Nähe des elektrischen Heizelements (7) positioniert sind,
- zweite Mittel (9) zum Messen der Temperatur, die auf mindestens einem der Reduktionselemente (4a, 4b) positioniert sind,
- einen ersten PID-Regler (10), der ausgelegt ist, um die Stromversorgung des elektrischen Heizelements (7) auf Basis der Differenz zwischen einer auf der Schellenhälfte (3a, 3b) gemessenen Temperatur (T_{M}) und einer gewünschten Referenztemperatur (T_{SM}) in der Schellenhälfte (3a, 3b) zu regeln,
- einen zweiten PID-Regler (11), der ausgelegt ist, um einen Wert der gewünschten Referenztemperatur (T_{SM}) auf den Schellenhälften (3a, 3b) auf Basis der Differenz zwischen einer auf dem Reduktionselement (4a, 4b) mittels der zweiten Mittel (9) zum Messen der Temperatur gemessenen Temperatur (T_{R}) und einer gewünschten, im Vorfeld festgelegten Betriebstemperatur (T_{L}) des Reduktionselements (4a, 4b) zu erzeugen.

2. Muffenformmaschine nach dem vorhergehenden Anspruch, **dadurch gekennzeichnet, dass** sie eine computerisierte Steuer- und Regelungseinheit umfasst, die ausgelegt ist, um die Einstellung der gewünschten Betriebstemperatur (T_{L}) zu empfangen und durch den ersten und den zweiten PID-Regler (10, 11) die Regulierung der Stromversorgung des mindestens einen elektrischen Heizelements (7) zu regeln, sodass das Reduktionselement (4a, 4b) die gewünschte Betriebstemperatur (T_{L}) erreicht.

3. Muffenformmaschine nach einem der vorhergehenden Ansprüche, wobei die ersten und die zweiten Mittel zum Messen der Temperatur Thermoelemente (8, 9) umfassen, **dadurch gekennzeichnet, dass** sie mindestens ein jeweiliges Thermoelement (8) umfasst, das in jeder der Schellenhälften (3a, 3b) positioniert ist, und dadurch, dass sie mindestens ein jeweiliges Thermoelement (9) umfasst, das in einem jeden der Reduktionselemente (4a, 4b) positioniert ist.

4. Muffenformmaschine nach Anspruch 3, **dadurch gekennzeichnet, dass** sie für eine jede Schellenhälfte (3a, 3b) und ein jedes entsprechendes Reduktionselement (4a, 4b) einen jeweiligen ersten PID-Regler (10) und einen jeweiligen zweiten PID-Regler (11) umfasst.

5. Muffenformmaschine nach einem der vorhergehenden Ansprüche, **dadurch gekennzeichnet, dass** die Heizstation (1) unmittelbar nach der Formungsstation positioniert ist, an der ein Endabschnitt (2a) der Rohre (2) in der Form einer Glocke ausgeformt ist.

6. Regelungsverfahren zum Regeln des thermischen Zustands einer Heizstation einer Muffenformmaschine für Rohre (2) aus thermoplastischem Material, umfassend die folgenden Schritte:
- Vorbereiten einer Heizstation (1) zum Erhitzen von Rohren (2), umfassend ein Paar Schellenhälften (3a, 3b), zwei Reduktionselemente (4a, 4b), die jeweils von einer jeweiligen Schellenhälfte (3a, 3b) getragen werden und passend zueinander ausgelegt sind, um die Rohre (2) an einem jeweiligen Endabschnitt (2a) in Kontakt zu umschließen,
- Vorbereiten von mindestens einem elektrischen Heizelement (7), das betriebswirksam in einer jeden Schellenhälfte (3a, 3b) positioniert ist,
- Einstellen einer gewünschten Betriebstemperatur (T_{L}) für die Reduktionselemente (4a, 4b),
- Messen der Temperatur (T_{M}) der Schellenhälften (3a, 3b) nahe am elektrischen Heizelement (7),
- Regeln der Stromversorgung des elektrischen Heizelements (7) mittels eines ersten PID-Reglers (10) auf Basis der Differenz zwischen der in den Schellenhälften (3a, 3b) gemessenen Temperatur (T_{M}) und einer gewünschten Referenztemperatur (T_{SM}) für die Schellenhälften (3a, 3b),
- Messen der Temperatur (T_{R}) eines entsprechenden Reduktionselements (4a, 4b), das von einer der Schellenhälften (3a, 3b) getragen wird,
- Regeln dieser gewünschten Referenztemperatur (T_{SM}) mittels eines zweiten PID-Reglers (11) auf Basis der auf dem entsprechenden Reduktionselement (4a, 4b) gemessenen Temperatur (T_{R}),
- Wiederholen der mittels des ersten und zweiten PID-Reglers (10, 11) durchgeführten Regelungsschritte, bis die im entsprechenden Reduktionselement (4a, 4b) gemessene Temperatur (T_{R}) mit der gewünschten Betriebstemperatur (T_{L}) übereinstimmt.

7. Regelungsverfahren nach dem vorhergehenden Anspruch, **dadurch gekennzeichnet, dass** der Schritt zum Regeln dieser gewünschten Referenztemperatur (T_{SM}) den Schritt zum Aktualisieren des Werts der gewünschten Referenztemperatur (T_{SM}) für die Schellenhälften (3a, 3b) umfasst.

8. Regelungsverfahren nach Anspruch 6 oder 7, **dadurch gekennzeichnet, dass** der Schritt zum Wiederholen der Regelungsschritte mit unterschiedlichen Häufigkeiten für den ersten und den zweiten Regler (10, 11) durchgeführt wird.

9. Verfahren nach Anspruch 8, **dadurch gekennzeichnet, dass** die Häufigkeit, mit der der Regelungsschritt mit dem ersten PID-Regler (10) durchgeführt wird, diejenige, mit der dieser mit dem zweiten PID-Regler (11) durchgeführte Regelungsschritt wiederholt wird, mindestens um das 10-Fache überschreitet.

10. Regelungsverfahren nach einem der Ansprüche 6 bis 9, **dadurch gekennzeichnet, dass** es einen Schritt zum anfänglichen Festlegen des Werts der gewünschten Betriebstemperatur (T_{L}) als den ersten Wert der gewünschten Referenztemperatur (T_{SM}) für die Schellenhälften (3a, 3b) umfasst.

11. Regelungsverfahren nach einem der Ansprüche 6 bis 10, **dadurch gekennzeichnet, dass** der Wiederholungsschritt nur dann durchgeführt wird, wenn ein erster stationärer Beharrungszustand der auf dem Reduktionselement (4a, 4b) gemessenen Temperatur (T_{R}) erreicht ist.

## Revendications

1. Tulipeuse pour tuyaux (2) en matériau thermoplastique, comprenant au moins une station de chauffage (1) pour chauffer les tuyaux (2) à former et une station de formage au niveau de laquelle une portion d'extrémité (2a) desdits tuyaux (2) est façonnée en forme de cloche, ladite au moins une station de chauffage (1) comprenant :
- une paire de demi-pinces (3a, 3b) conçues pour se refermer autour de ladite portion d'extrémité (2a) des tuyaux (2),
- deux éléments de réduction (4a, 4b) supportés chacun par une demi-pince (3a, 3b) respective et configurés pour s'adapter mutuellement pour enfermer en contact lesdits tuyaux (2) au niveau de leur dite portion d'extrémité (2a),
- au moins un élément de chauffage électrique (7) qui est positionné de manière opérationnelle dans chacune desdites demi-pinces (3a, 3b),
- des premiers moyens (8) pour mesurer la température positionnés dans au moins une desdites demi-pinces (3a, 3b), à proximité dudit élément de chauffage électrique (7),
- des seconds moyens (9) pour mesurer la température positionnés sur au moins un desdits éléments de réduction (4a, 4b),
- un premier contrôleur PID (10) configuré pour contrôler l'alimentation de l'élément de chauffage électrique (7) sur la base de la différence entre une température (T_{M}) mesurée sur ladite demi-pince (3a, 3b) et une température de référence souhaitée (T_{SM}) dans ladite demi-pince (3a, 3b),
- un second contrôleur PID (11) configuré pour générer une valeur de ladite température de référence souhaitée (T_{SM}) des demi-pinces (3a, 3b) sur la base de la différence entre une température (T_{R}) mesurée sur ledit élément de réduction (4a, 4b) par lesdits seconds moyens (9) pour mesurer la température, et une température de fonctionnement souhaitée (T_{L}) dudit élément de réduction (4a, 4b) déterminée à l'avance.

2. Tulipeuse selon la revendication précédente, **caractérisée en ce qu'**elle comprend une unité de commande et de contrôle informatisée configurée pour recevoir le réglage de ladite température de travail souhaitée (T_{L}) et pour contrôler par l'intermédiaire desdits premier et second contrôleurs PID (10, 11) la régulation de l'alimentation électrique dudit au moins un élément de chauffage électrique (7) de telle sorte que ledit élément de réduction (4a, 4b) atteigne ladite température de travail souhaitée (T_{L}).

3. Tulipeuse selon l'une quelconque des revendications précédentes, dans laquelle lesdits premier et second moyens pour mesurer la température comprennent des thermocouples (8, 9), **caractérisée en ce qu'**elle comprend au moins un thermocouple (8) respectif positionné dans chacune desdites demi-pinces (3a, 3b) et **en ce qu'**elle comprend au moins un thermocouple (9) respectif positionné dans chacun desdits éléments de réduction (4a, 4b).

4. Tulipeuse selon la revendication 3, **caractérisée en ce qu'**elle comprend pour chaque demi-pince (3a, 3b) et élément de réduction (4a, 4b) correspondant un premier contrôleur PID (10) respectif et un second contrôleur PID (11) respectif.

5. Tulipeuse selon l'une quelconque des revendications précédentes, **caractérisée en ce que** ladite station de chauffage (1) est positionnée immédiatement en amont de ladite station de formage au niveau de laquelle une portion d'extrémité (2a) desdits tuyaux (2) est façonnée en forme de cloche.

6. Procédé de contrôle pour contrôler l'état thermique d'une station de chauffage d'une tulipeuse pour tuyaux (2) en matériau thermoplastique, comprenant les étapes de :
- préparer une station de chauffage (1) pour chauffer des tuyaux (2) comprenant une paire de demi-pinces (3a, 3b), deux éléments de réduction (4a, 4b) chacun supporté par une demi-pince (3a, 3b) respective et configuré pour s'adapter mutuellement pour enfermer en contact lesdits tuyaux (2) au niveau d'une portion d'extrémité (2a) correspondante,
- préparer au moins un élément de chauffage électrique (7) qui est positionné de manière opérationnelle dans chacune desdites demi-pinces (3a, 3b),
- régler une température de fonctionnement souhaitée (T_{L}) pour lesdits éléments de réduction (4a, 4b),
- mesurer la température (TM) desdites demi-pinces (3a, 3b) à proximité de l'élément de chauffage électrique (7),
- contrôler l'alimentation électrique dudit élément de chauffage électrique (7) au moyen d'un premier contrôleur PID (10) sur la base de la différence entre la température (T_{M}) mesurée dans lesdites demi-pinces (3a, 3b) et une température de référence souhaitée (T_{SM}) pour lesdites demi-pinces (3a, 3b),
- mesurer la température (T_{R}) d'un élément de réduction (4a, 4b) correspondant supporté par l'une desdites demi-pinces (3a, 3b),
- contrôler ladite température de référence souhaitée (T_{SM}) au moyen d'un second contrôleur PID (11) sur la base de la température (T_{R}) mesurée sur l'élément de réduction (4a, 4b) correspondant,
- répéter lesdites étapes de contrôle actionnées au moyen desdits premier et second contrôleurs PID (10, 11), jusqu'à ce que la température (T_{R}) mesurée dans l'élément de réduction (4a, 4b) correspondant corresponde à la température de fonctionnement souhaitée (T_{L}).

7. Procédé de contrôle selon la revendication précédente, **caractérisé en ce que** l'étape de contrôler ladite température de référence souhaitée (T_{SM}) comprend l'étape de mettre à jour la valeur de ladite température de référence souhaitée (T_{SM}) pour lesdites demi-pinces (3a, 3b).

8. Procédé de contrôle selon la revendication 6 ou 7, **caractérisé en ce que** l'étape de répéter lesdites étapes de contrôle est effectuée avec des fréquences différentes pour lesdits premier et second contrôleurs (10, 11) PID.

9. Procédé selon la revendication 8, **caractérisé en ce que** la fréquence avec laquelle ladite étape de contrôle effectuée avec ledit premier contrôleur PID (10) est répétée est au moins dix fois supérieure à celle avec laquelle ladite étape de contrôle effectuée avec ledit second contrôleur PID (11) est répétée.

10. Procédé de contrôle selon l'une quelconque des revendications 6 à 9, **caractérisé en ce qu'**il comprend une étape d'imposer initialement la valeur de ladite température de fonctionnement souhaitée (T_{L}) comme première valeur de ladite température de référence souhaitée (T_{SM}) pour lesdites demi-pinces (3a, 3b).

11. Procédé de contrôle selon l'une quelconque des revendications 6 à 10, **caractérisé en ce que** ladite étape de répéter est activée uniquement lorsqu'un premier état stationnaire stable de la température (T_{R}) mesurée sur l'élément de réduction (4a, 4b) est atteint.
